Europäisches Patentamt

European Patent Office

Office européen des brevets

(19)

(11) Numéro de publication : **0 076 741**
**B1**

# FASCICULE DE BREVET EUROPÉEN

(12)

(45) Date de publication du fascicule du brevet :
**12.02.86**

(21) Numéro de dépôt : **82401763.6**

(22) Date de dépôt : **29.09.82**

(51) Int. Cl.⁴ : **A 01 F 15/14, B 65 B 27/12**

(54) **Procédé de liage automatique à partir d'un lien dont les extrémités sont superposées en sens opposé pour la ligature, et ensemble pour la mise en oeuvre de ce procédé.**

(30) Priorité : **30.09.81 FR 8118379**

(43) Date de publication de la demande :
**13.04.83 Bulletin 83/15**

(45) Mention de la délivrance du brevet :
**12.02.86 Bulletin 86/07**

(84) Etats contractants désignés :
**BE DE GB IT NL**

(56) Documents cités :
**DE-C- 580 031**
**FR-A- 1 070 503**
**FR-A- 2 125 091**
**FR-A- 2 194 153**
**FR-A- 2 254 483**

(73) Titulaire : **INSTITUT TECHNIQUE AGRICOLE DU LIN**
**5, rue du Cardinal Mercier**
**F-75009 Paris (FR)**

(72) Inventeur : **Sultana, Claude**
**25, boulevard de Verdun**
**F-92400 Courbevoie (FR)**

(74) Mandataire : **Hud, Robert**
**Cabinet COLLIGNON 6, rue de Madrid**
**F-75008 Paris (FR)**

Jouve, 18, rue St-Denis, 75001 Paris, France

## Description

La présente invention concerne un procédé de liage automatique à partir d'un lien dont les extrémités sont superposées en sens opposé pour la ligature, ainsi qu'un ensemble pour la mise en œuvre de ce procédé.

Il existe de nombreux procédés de liage utilisés pour fermer des liens en superposant les extrémités en sens opposé, procédés qui font intervenir des moyens plus ou moins complexes dont la mise en œuvre se complète d'interventions manuelles. Il existe aussi des moyens automatiques qui permettent de lier des colis, même sous presse, selon ces procédés.

Mais ces moyens ne peuvent fonctionner dans une presse où les éléments progressent sans intervalle entre eux dans un conduit en pression, en posant les liens dans le sens de la progression car il faut lancer le lien et, pour cela, les quatre côtés dans le plan du lien doivent être dégagés.

Il existe également des moyens pour lier des colis avec progression continue dans un canal sous pression, mais les procédés de liage superposent dans le même sens les extrémités du lien : ces procédés sont, à titre d'exemple, mis en œuvre dans les presses agricoles à partir de liens souples (ficelles) ou malléables (fil de fer recuit).

Le document FR-A-1 070 503 décrit un appareil pour lier des ballots de paille ou autres, qui assure un maintien des deux extrémités du lien de part et d'autre de la zone de liage, ces extrémités étant recourbées respectivement sur elles-mêmes pour constituer des boucles qui se croisent et sont destinées à être torsadées dans la zone de croisement.

Le document FR-A-2 125 091 décrit une machine pour presser et ligaturer des balles, dans laquelle une superposition des extrémités du lien est réalisée par le dispositif de liage lui-même.

La présente invention a pour objet de réaliser, automatiquement et dans un temps très bref, une opération de liage que l'on peut faire manuellement à l'aide d'un moyen approprié à la nature du lien, la ligature se faisant, selon le cas, par agrafage, soudage ou torsion des extrémités superposées (ou juxtaposées avec recouvrement, selon la forme du lien).

L'utilisation de ces moyens demande toujours l'introduction d'une extrémité du lien dans un sens et de l'autre extrémité en sens opposé.

Généralement, le lien n'est pas coupé à dimension à l'avance, mais seulement après liage, le lien étant prélevé sur une réserve importante (bobine, pelote, etc.).

Après liage et coupure, l'extrémité devenue libre du prochain lien doit être dégagée du dispositif pour être réintroduite de l'autre côté de l'appareil.

Le procédé fonctionne avantageusement pour lier un élément dans un conduit où les colis ou la matière progressent sans interruption et en subissant une pression dans au moins deux plans différents, mais aussi dans une presse où l'effort ne s'exerce que dans un seul plan.

Le présent procédé fait intervenir successivement les opérations suivantes :

— un maintien, durant la compression de l'élément à lier, d'une extrémité du lien sur un côté du canal, dit côté de liage, le lien passant à partir de cette extrémité à travers le canal le long de la face frontale dudit élément à lier puis suivant la face dudit élément opposée au côté de liage du canal, venant éventuellement d'une réserve ;

— une amenée, après la compression et au début de l'opération de liage proprement dite, du prolongement du lien situé sur ladite face opposée à travers le canal le long de la face arrière de l'élément à lier vers le côté de liage, fournissant ainsi une deuxième extrémité du lien ;

— une libération de la première extrémité qui, déplacée, est soumise à un second maintien, tandis que la partie amenée du lien, formant la deuxième extrémité, est saisie et maintenue à son tour ;

— une exécution du liage des deux extrémités ensemble entre les points de maintien respectifs, avec coupure éventuelle du lien pour l'isoler de la réserve ;

— un maintien de l'extrémité nouvelle du lien en attente de la formation d'un prochain élément à lier ;

et il se caractérise en ce qu'il consiste à réaliser, préalablement au liage, une superposition des extrémités dirigées en sens opposé sur la longueur comprise entre les points de maintien respectifs, ceci par la mise en œuvre complémentaire suivante :

— la première extrémité est, lors de son maintien durant la compression de l'élément à lier, tenue recourbée sur une longueur égale à la susdite longueur ;

— au début de l'opération de liage, cette partie recourbée est redressée et libérée puis par son second maintien une rotation d'ensemble de la première extrémité avec sa partie recourbée est effectuée, de manière à laisser le prolongement de la première extrémité libre en vue de la superposition ;

— la partie amenée du lien formant la deuxième extrémité, une fois saisie et maintenue, est superposée sur ce prolongement de la première extrémité au-delà du point de maintien de cette dernière, si bien que la longueur à ligaturer se trouve située entre les points de maintien respectifs de chaque extrémité ;

— le liage est exécuté sur cette longueur de superposition des deux extrémités, maintenue en place et tendue par les points de maintien.

Le présent procédé met en œuvre avantageusement des liens présentant au moins une dimension importante dans la section. Ces liens peuvent être par exemple plats, ronds ou ovales. Les liens de petites dimensions pourraient être également utilisés dans ce procédé, mais cela offre peu d'intérêt, car il existe des moyens connus de ligature automatique dans ce cas.

Le présent procédé fait appel à un ensemble constitué par les moyens suivants :

— un moyen de maintien situé sur un côté du canal, dit côté de liage, et destiné à maintenir la première extrémité du lien durant la compression, à la libérer en s'ouvrant durant le processus de liage, de manière à pouvoir ensuite saisir et maintenir durant le liage une partie amenée du lien formant deuxième extrémité, le trajet du lien durant la période de compression étant telle que le lien, à partir de sa première extrémité maintenue, traverse le canal le long de la face frontale de l'élément à lier pour suivre la face de l'élément à lier opposée au côté de liage avant de rejoindre éventuellement une réserve ;

— un moyen mobile d'amenée du prolongement du lien situé sur ladite face opposée de l'élément à lier, ce moyen d'amenée conduisant par passage à travers le canal ce prolongement du lien sur le côté de liage à portée du moyen de maintien ;

— un moyen de saisie, apte à saisir, déplacer et maintenir la première extrémité durant l'opération de liage ;

— un dispositif de liage, et éventuellement de coupure, approprié à la nature du lien ;
cet ensemble étant caractérisé en ce que, pour la mise en œuvre du procédé :

— le moyen de maintien est mobile dans un plan parallèle au plan contenant le trajet du lien autour de l'élément à lier et est déplaçable entre deux positions situées de part et d'autre du moyen de saisie, une première position dans laquelle il maintient la première ou deuxième extrémité en avant du moyen de saisie, vue dans le sens de défilement des éléments à lier, de façon que le prolongement de ces extrémités passe à proximité de ce moyen de saisie, la première extrémité tournant autour de ce moyen de saisie et étant ainsi recourbée du fait de son maintien et du fait de l'avancée de l'élément à lier dépassant le moyen de saisie, et une deuxième position en arrière du moyen de saisie où, ramenant la partie recourbée de la première extrémité, il la libère et est prêt à recevoir la deuxième extrémité pour superposer cette dite extrémité par retour à sa première position ;

— le moyen de saisie, capable d'ouverture et de fermeture, effectue le déplacement final de la partie recourbée de la première extrémité par rotation sur lui-même, l'axe de rotation étant perpendiculaire au plan contenant le trajet du lien, de manière à laisser le prolongement de la première extrémité libre en vue de la superposition, et maintient cette extrémité jusqu'à la fin de l'opération de liage ;

— un moyen est prévu pour amener le dispositif de liage dans la zone de superposition des extrémités du lien.

L'ensemble des mouvements de mise en œuvre du procédé doit se réaliser dans un ordre défini.

La synchronisation des mouvements pourra être effectuée mécaniquement à partir d'un mouvement rotatif qui impliquera la simultanéité de certains mouvements, l'ensemble se faisant sur un cycle.

En cas de commande d'autre type (hydraulique, pneumatique, électrique, etc.), la succession chronologique des mouvements demeure la contrainte impérative, ces mouvements pouvant alors être désolidarisés.

Pour bien faire comprendre le procédé selon l'invention et l'ensemble assurant sa mise en œuvre, on en décrira ci-après une forme d'exécution préférée en référence au dessin schématique annexé dans lequel :

la figure 1  présente les moyens de mise en œuvre du procédé dans le cas d'un conduit sous pression où les éléments progressent en contact l'un de l'autre ;

la figure 2  montre la pince de retenue dans deux positions de travail : fermée et ouverte, la position ouverte de la pince étant présentée en coupe ; la came qui intervient dans le fonctionnement de cette pince figurant également sur cette figure ;

la figure 3  présente la pince de retournement fermée ;

la figure 4  présente la pince de retournement ouverte ;

la figure 5  montre le principe de commande, de fermeture et rotation de la pince de retournement du lien ;

la figure 6  présente, en vue de dessus, la situation des différentes pinces et du moyen de liage ; et

les figures 7A à 7J  montrent le principe de fonctionnement du procédé dans ses phases principales.

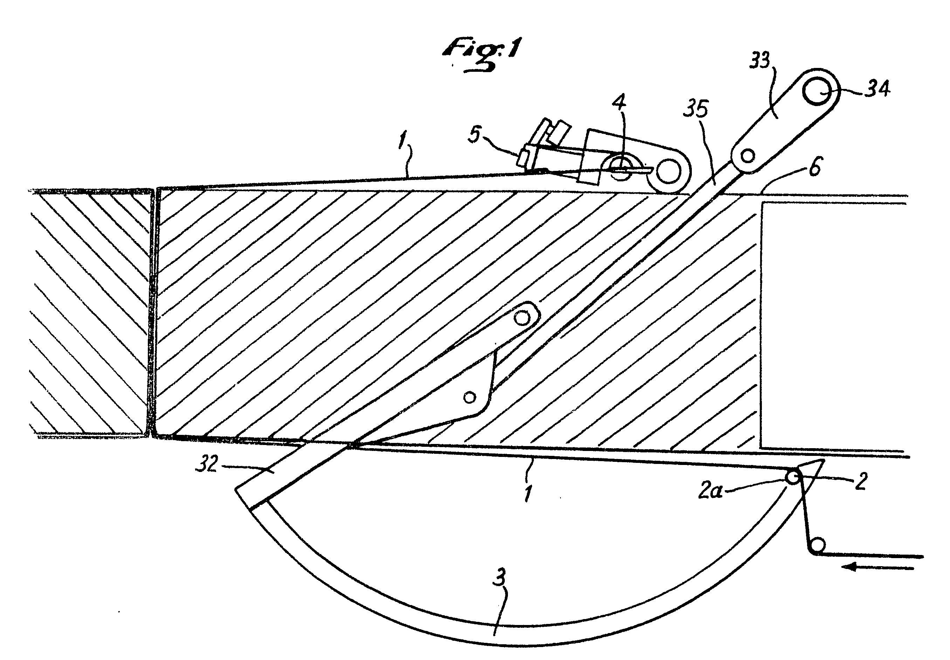

Pour comprendre plus facilement le procédé, cn prendra l'exemple d'une presse comportant un canal de compression dans lequel la matière avance sous l'action d'un piston éventuellement soumis à un mouvement alternatif, comme par exemple les presses agricoles ou certaines presses à déchets (cas de la figure 1).

Le lien 1 part d'une réserve, passe dans le chas 2 d'une aiguille 3 située au repos (par exemple) en dessous du canal 6, puis sur le galet 2a dans le chas, continue vers l'arrière à la partie inférieure du canal 6, traverse le canal entre le colis précédemment lié et le colis en formation, revient à la partie supérieure du canal 6 vers l'entrée, tourne autour de la pince de retournement 4 et se termine dans la pince de retenue 5.

Cette trajectoire est une trajectoire classique pour tout lien dans une presse du type cité en exemple.

L'originalité du dispositif tient à la forme, au mouvement de la pince de retenue 5 et de la pince d'inversion (ou de retournement) 4 ainsi qu'à la synchronisation de l'ensemble des mouvements.

La position relative des deux pinces est fonction de l'espace disponible et de la taille des pièces : elles peuvent être coaxiales ou voisines.

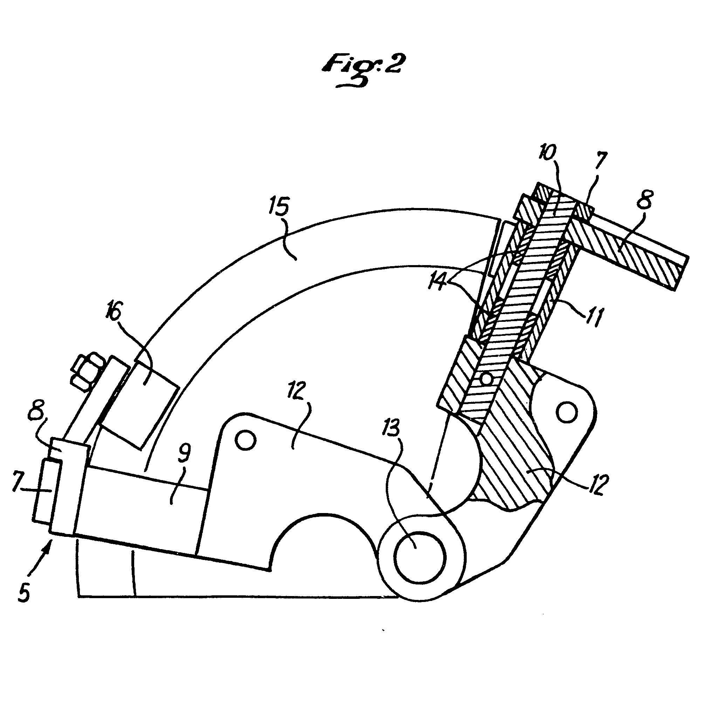

La pince de retenue 5 (figure 2) a des fonctions multiples. Elle doit :

— saisir le lien 1 amené par l'aiguille 3,

— superposer le lien sur l'extrémité déjà tenue en l'amenant à la position de liage,

— retenir l'extrémité du lien pendant la formation de la balle suivante.

Elle comporte les parties suivantes :

Deux mâchoires 7 et 8 placées perpendiculairement à un bras cylindrique 9 constitué d'un axe 10 et d'un manchon 11. Le bras 9 est fixé sur un support 12 pouvant pivoter autour d'un axe 13 parallèle au plastron (plate-forme supportant tous les éléments du lieur) mais dans un plan perpendiculaire à celui du lien, le bras 9 se déplaçant dans un plan parallèle au plan de l'aiguille 3 d'amenée du lien 1. Il effectue une rotation qui l'amène d'une position sensiblement horizontale (position de retenue et de liage) à une position sensiblement verticale (position de prise du lien) et vice versa.

La mâchoire 7 est solidaire du bras 9 par l'intermédiaire de l'axe 10 fixé dans le support 12 de la pince.

La mâchoire 8 est mobile ; elle est solidaire du manchon 11 enveloppant le bras 9 de la pince (deux bagues 14 assurant la liaison entre manchon et axe). Le mouvement de cette mâchoire 8 est commandé par une came 15 sur laquelle roule un galet 16 solidaire de la mâchoire 8.

La came 15 forme un chemin de roulement centré sur l'axe 13, mais dans un plan perpendiculaire. A son extrémité supérieure la came 15 lâche le galet 16. En échappant de la came 15, le galet 16 permet l'ouverture de la pince par la rotation de la mâchoire 8. Il faut noter que l'ensemble pince + came doit être très rigide. Aussi, pour compenser les contraintes pendant le fonctionnement, la came 15 peut comporter deux rampes parallèles formant chemin de roulement, l'axe 10 étant alors prolongé pour porter un galet venant s'appuyer sur la deuxième rampe. Le maintien de la pince, au moyen de deux galets retenus entre les rampes de la came, a pour avantage de supprimer les risques de flexion de la pince ou de la came.

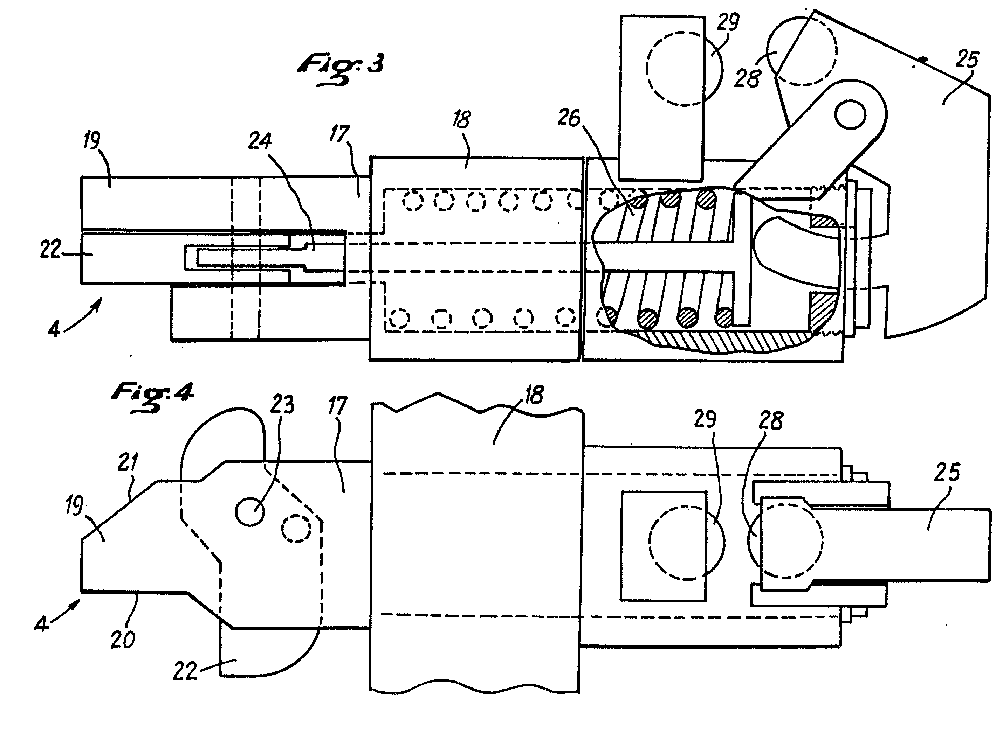

La pince de retournement 4 (figures 3 et 4) est formée par un corps cylindrique creux 17 axé dans un bâti 18 solidaire du plastron. La pince 4 est située dans un plan perpendiculaire à la direction du lien. L'axe de cette pince est parallèle à l'axe 13 (figure 2) de la pince de retenue 5. Les deux pinces peuvent éventuellement être concentriques comme signalé plus haut. La mâchoire 19, à l'extrémité de la pince 4, est solidaire du corps 17 et tourne avec lui. Elle comporte un bord 20 parallèle à l'axe. Le bord opposé 21 est biseauté. L'autre mâchoire 22 est mobile. Elle peut pivoter de 90° autour de l'axe 23 sous la poussée de la biellette 24 commandée par le poussoir 25. La biellette 24 est logée dans le corps 17 de la pince où se trouve également un ressort 26 qui assure l'ouverture de la mâchoire 22.

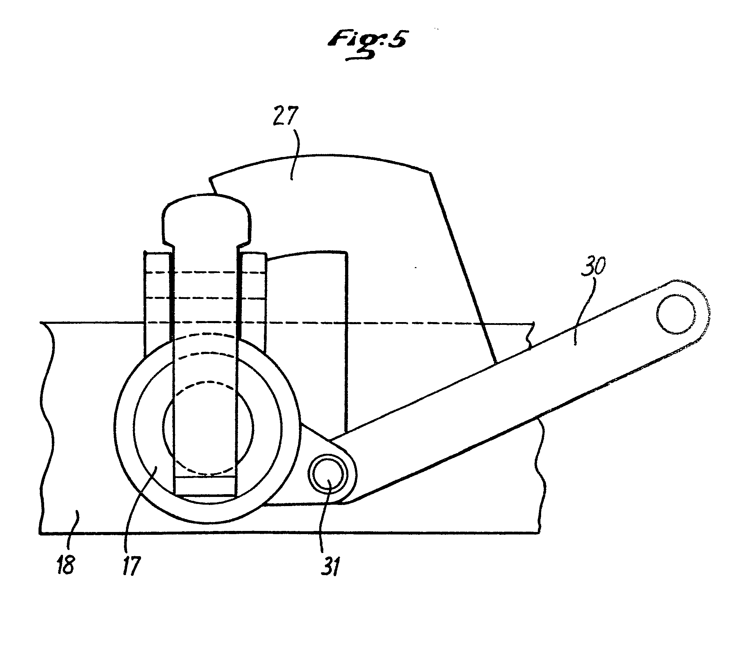

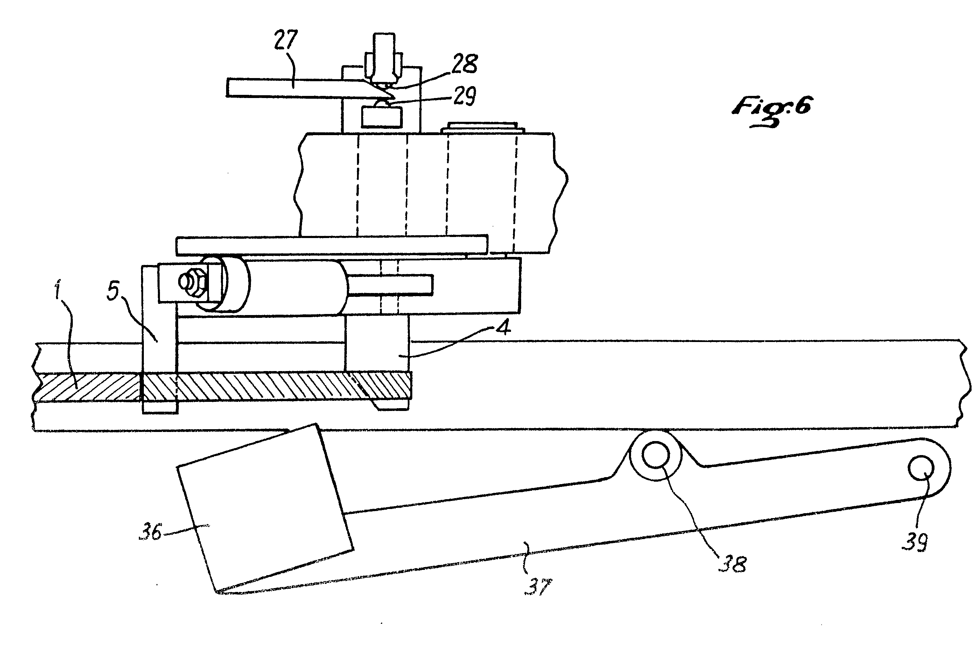

La fermeture de la mâchoire 22 est réalisée par l'action d'une came 27 (voir figures 5 et 6) qui agit entre l'extrémité 28 du poussoir 25 et une butée 29 solidaire du corps 17.

L'extrémité 28 et la butée 29 peuvent être constituées par des billes ou des galets.

Le fonctionnement de la pince 4 se fait en deux temps (figure 5) :

— premier temps : fermeture de la pince : dans la première partie de sa rotation (sur environ 30°) le levier de commande 30 articulé sur le corps 17 au point 31 permet à la came 27, dont il est solidaire, d'agir sur le poussoir 25 pour fermer la pince 4 ;

— deuxième temps : rotation de la pince 4 de 90°. Après fermeture de la pince, le levier de commande 30 arrive en butée contre le corps 17 de la pince. En continuant sa rotation, il entraîne la pince 4. Une butée escamotable non représentée assure la fermeture de la pince avant sa rotation.

L'aiguille 3 (figure 1) peut être du même type que celles utilisées généralement dans les presses agricoles pour le liage à la ficelle ou au fil de fer. Elle a une forme en arc de cercle et se termine par une pointe, comportant un chas 2 et un galet 2a permettant le passage facile du lien dans le plan médian de l'aiguille.

L'aiguille est portée par un balancier 32 qui, par un mouvement circulaire, permet d'amener le lien 1 d'un côté à l'autre du colis à lier en passant généralement dans les fentes spécialement aménagées de l'élément de compression (piston).

Le mouvement du balancier 32 est commandé par une manivelle 33 tournant autour d'un axe 34 par l'intermédiaire d'une bielle 35.

Le procédé pouvant s'appliquer à différents liens, il conviendra donc d'utiliser un dispositif de liage approprié, par exemple :

— pince à sertir pour un lien plat métallique,

— pince à souder pour un lien plat plastique,

— pince à torsader pour un lien métallique rond ou ovale.

Le dispositif de liage 36 (figure 6) est fixé sur un balancier 37 qui lui permet un déplacement dans un plan sensiblement parallèle au plastron, en pivotant autour de l'axe 38 perpendiculaire au plastron. Le dispositif pourra ainsi être positionné de manière à réaliser correctement le liage. Le déplacement du dispositif sera obtenu par action sur l'extrémité 39 du balancier 37 opposée à celle du dispositif.

Pour effectuer le liage, le dispositif 36 est placé entre la pince de retenue 5 et la pince de retournement 4. Dans cette zone les extrémités du lien 1 sont superposées en sens opposé et tenues dans les deux pinces précitées.

Le retour au point de repos du dispositif de liage 36 peut être commandé ou, plus avantageusement, se faire sous l'action d'un ressort (non représenté). La commande de fonctionnement du dispositif de liage comme celle de tous les mouvements du procédé pourra être réalisée hydrauliquement, pneumatiquement, électriquement ou mécaniquement.

Dans le cas de commande hydraulique, pneumatique, électrique ou mixte, l'exécution des mouvements pourra être réalisée directement par vérins ou moteurs, la synchronisation se faisant par capteurs fin de course.

Dans le cas de commande mécanique, l'exécution des mouvements pourra se faire par cames, galets et tringleries.

Pour assurer la synchronisation, les cames peuvent être avantageusement portées par des disques axés sur l'arbre de commande 34 des aiguilles (figure 1) ce qui assure la réalisation de tous les mouvements sur un cycle du dispositif d'entraînement des aiguilles.

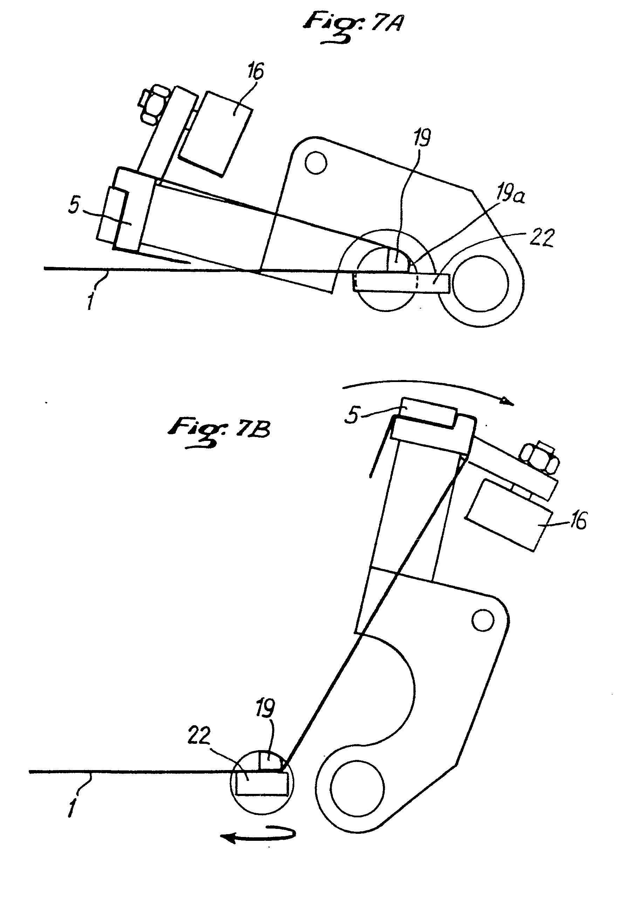

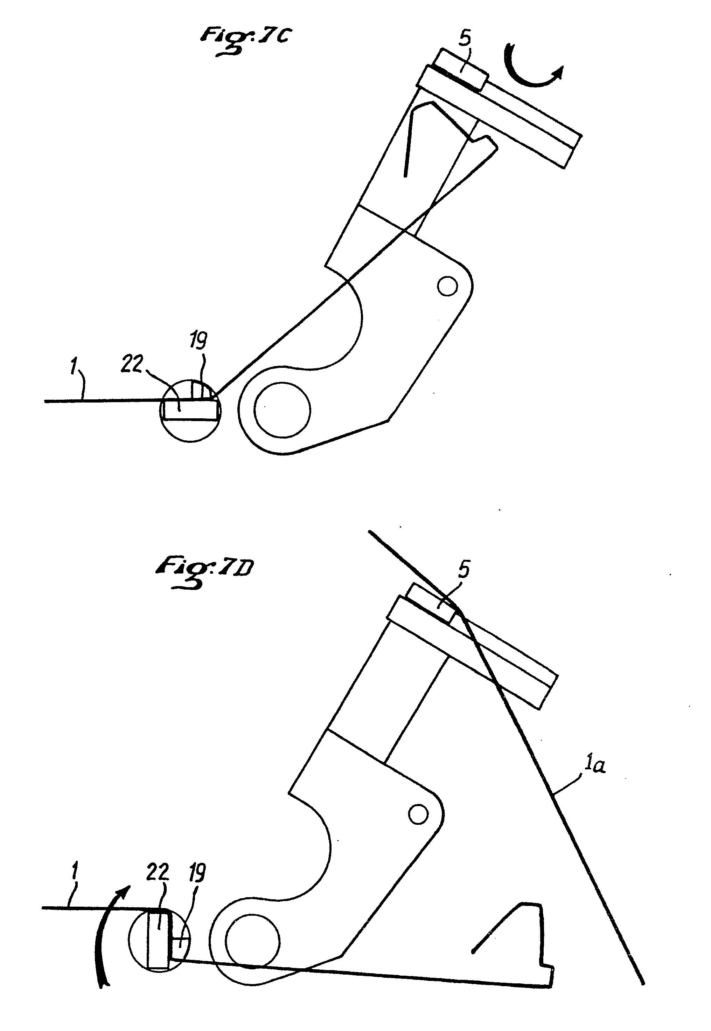

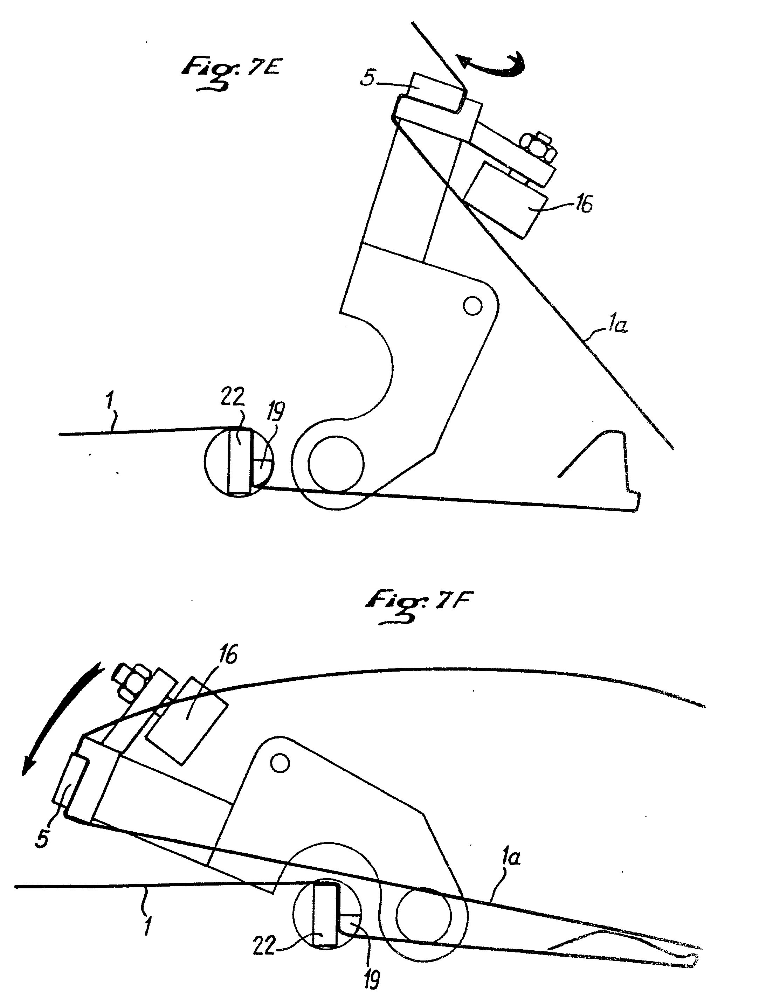

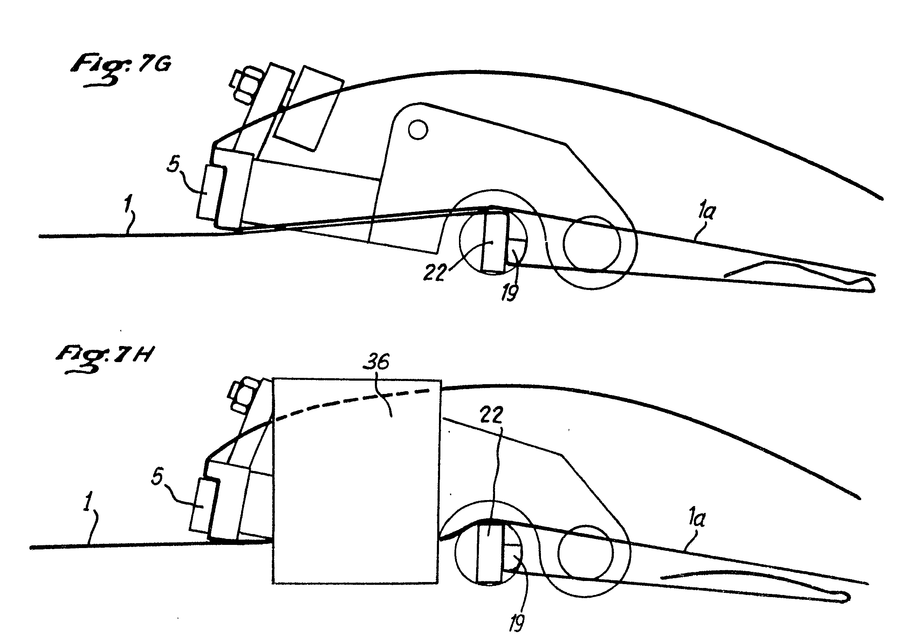

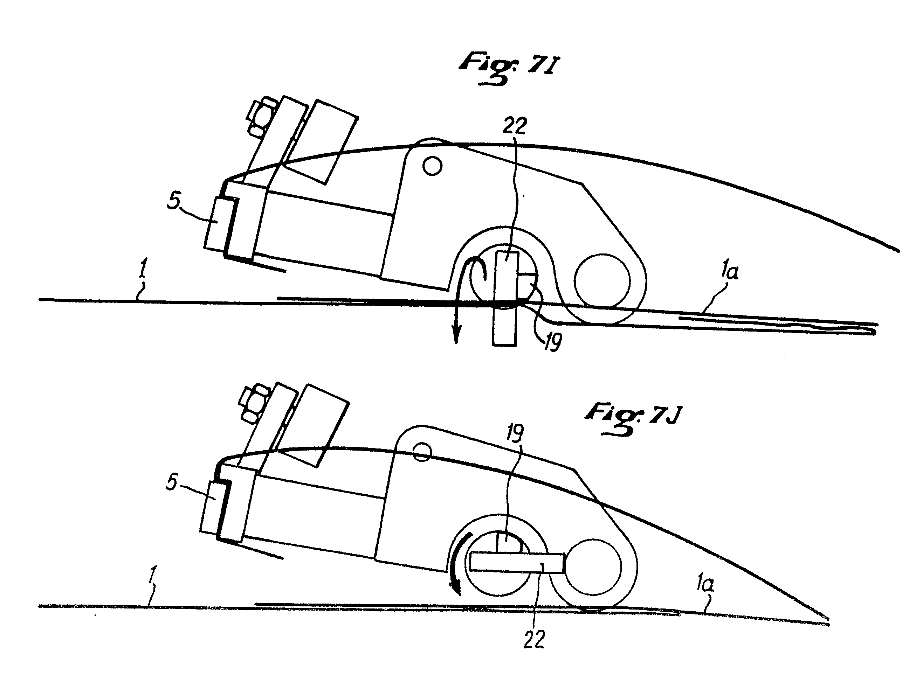

On expliquera maintenant le fonctionnement en référence aux figures 7A à 7J qui montrent les mouvements des pinces de retenue et d'inversion.

Figure 7A Pendant la formation du colis, l'extrémité du lien 1 est tenue dans la pince de retenue 5, le lien passe autour de la mâchoire 19 de la pince de retournement 4 en contournant le bord 19a et sa trajectoire se poursuit le long de l'élément en formation.

Figure 7B La longueur déterminée de l'élément est atteinte ; l'ordre de liage est donné. Pendant que l'aiguille commence sa rotation et pénètre dans le canal, la pince de retenue 5 tourne sans relâcher le lien 1, le galet 16 roulant sur la came non figurée. Simultanément, la pince de retournement 4 se ferme : la mâchoire 22 dans sa rotation vient pincer le lien 1 contre la mâchoire 19.

Figure 7C En fin de rotation de la pince de retenue 5, le galet 16 échappe de la came en permettant l'ouverture de la pince 5 et le relâchement de l'extrémité du lien 1.

Figure 7D Rotation de la pince de retournement 4 (mâchoires 19 et 22). Par cette rotation la pince 4 présente l'extrémité du lien 1 dans une position qui permet une bonne superposition de la deuxième extrémité du lien. En même temps l'aiguille 3 dépasse le canal et présente le lien 1a dans la pince de retenue 5 ouverte.

Figure 7E Fermeture de la pince de retenue 5. Cette fermeture se fait en début de rotation de la pince. Au contact du galet 16 sur la came non figurée, l'aiguille 3 amorce à ce moment-là son retour.

Figure 7F Rotation de la pince de retenue 5 avec tension de l'extrémité 1a du lien. L'aiguille (non figurée sur la figure) continue son retour, mais dépasse encore au-dessus du plastron.

Figure 7G La pince de retenue 5 superpose sur le lien 1 l'extrémité 1a. Le lien est toujours en tension. L'aiguille (non représentée) s'escamote dans le canal.

Figure 7H Liage : le dispositif de liage 36 est effectué selon le procédé adéquat pour le lien utilisé (ex. sertissage pour un feuillard métallique, sertissage ou soudage pour un feuillage plastique, etc.). Généralement avec coupe du lien dont la nouvelle extrémité reste tenue dans la pince de retenue 5.

Figure 7I Retrait du dispositif de liage 36 non représenté et ouverture de la mâchoire 22 de la pince de retournement 4. Le lien 1 toujours en tension est libéré et il échappe à la pince de retournement 4 grâce au biseau de la mâchoire 19.

Figure 7J Rotation de la pince de retournement 4 et retour de l'aiguille au point mort arrière. Les organes sont revenus dans la position de formation et de compression d'un élément.

Le procédé s'appliquera avantageusement au liage de produits ou matières compressibles, plus particulièrement dans tous les cas où l'on fait appel à un lien présentant une dimension importante dans au moins un plan de sa section.

Le procédé conviendra bien pour tous les liens présentant une bonne résistance à la rupture, nécessaire pour lier des éléments de grande taille ou sous forte pression.

On peut citer comme utilisations possibles non limitatives, le liage de pailles de céréales, des produits fibreux (coton, laine, sisal, jute, etc.), de l'alfa, des déchets de l'industrie textile, de cartons ou papier, de pailles textiles et notamment du lin.

## Revendications

1. Procédé de liage d'éléments sous pression défilant en continu ou en discontinu dans un canal de pressage (6), consistant en :
— un maintien, durant la compression de l'élément à lier, d'une extrémité (1) du lien sur un côté du canal (6), dit côté de liage, le lien passant à partir de cette extrémité (1) à travers le canal le long de la face frontale dudit élément à lier puis suivant la face dudit élément opposée au côté de liage du canal, venant éventuellement d'une réserve ;
— une amenée, après la compression et au début de l'opération de liage proprement dite, du prolongement du lien situé sur ladite face opposée à travers le canal le long de la face arrière de l'élément à lier vers le côté de liage, fournissant ainsi une deuxième extrémité (1a) du lien ;
— une libération de la première extrémité, qui, déplacée, est soumise à un second maintien, tandis que la partie amenée du lien, formant la deuxième extrémité (1a) est saisie et maintenue à son tour ;
— une exécution du liage des deux extrémités ensemble entre les points de maintien (4, 5) respectifs, avec coupure éventuelle du lien pour l'isoler de la réserve ;
— un maintien de l'extrémité nouvelle du lien en attente de la formation d'un prochain élément à lier ;
caractérisé en ce qu'il consiste à réaliser, préalablement au liage, une superposition des extrémités dirigées en sens opposé sur la longueur comprise entre les points de maintien respectifs (4, 5), ceci par la mise en œuvre complémentaire suivante :
— la première extrémité (1) est, lors de son maintien durant la compression de l'élément à lier, tenue recourbée sur une longueur égale à la susdite longueur ;
— au début de l'opération de liage, cette partie recourbée est redressée et libérée puis par son second maintien une rotation d'ensemble de la première extrémité avec sa partie recourbée est effectuée, de manière à laisser le prolongement de la première extrémité libre en vue de la superposition ;

— la partie amenée du lien formant la deuxième extrémité (1a), une fois saisie et maintenue, est superposée sur ce prolongement de la première extrémité au-delà du point de maintien (4) de cette dernière, si bien que la longueur à ligaturer se trouve située entre les points de maintien (4, 5) respectifs de chaque extrémité ;

— le liage est exécuté sur cette longueur de superposition des deux extrémités, maintenue en place et tendue par les points de maintien.

2. Procédé selon la revendication 1, caractérisé en ce qu'il utilise des liens présentant au moins une dimension importante dans la section, ces liens pouvant par exemple être de forme plate, ronde ou ovale.

3. Ensemble de liage d'éléments sous pression défilant en continu ou en discontinu dans un canal de pressage (6), comportant :

— un moyen de maintien (5) situé sur un côté du canal, dit côté de liage, et destiné à maintenir la première extrémité (1) du lien durant la compression, à la libérer en s'ouvrant durant le processus de liage, de manière à pouvoir ensuite saisir et maintenir durant le liage une partie amenée du lien formant deuxième extrémité (1a), le trajet du lien durant la période de compression étant telle que le lien, à partir de sa première extrémité maintenue, traverse le canal le long de la face frontale de l'élément à lier pour suivre la face de l'élément à lier opposée au côté de liage avant de rejoindre éventuellement une réserve ;

— un moyen mobile d'amenée (3) du prolongement du lien situé sur ladite face opposée de l'élément à lier, ce moyen d'amenée (3) conduisant par passage à travers le canal ce prolongement du lien sur le côté de liage à portée du moyen de maintien (5) ;

— un moyen de saisie (4), apte à saisir, déplacer et maintenir la première extrémité (1) durant l'opération de liage ;

— un dispositif de liage (36), et éventuellement de coupure, approprié à la nature du lien ;

caractérisé en ce que, pour la mise en œuvre du procédé selon la revendication 1 :

— le moyen de maintien (5) est mobile dans un plan parallèle au plan contenant le trajet du lien autour de l'élément à lier et est déplaçable entre deux positions situées de part et d'autre du moyen de saisie (4), une première position dans laquelle il maintient la première ou deuxième extrémité en avant du moyen de saisie (4), vue dans le sens de défilement des éléments à lier, de façon que le prolongement de ces extrémités passe à proximité de ce moyen de saisie, la première extrémité tournant autour de ce moyen de saisie et étant ainsi recourbée du fait de son maintien et du fait de l'avancée de l'élément à lier dépassant le moyen de saisie (4), et une deuxième position en arrière du moyen de saisie où, ramenant la partie recourbée de la première extrémité, il la libère et est prêt à recevoir la deuxième extrémité pour superposer cette dite extrémité par retour à sa première position ;

— le moyen de saisie (4), capable d'ouverture et de fermeture, effectue le déplacement final de la partie recourbée de la première extrémité (1) par rotation sur lui-même, l'axe de rotation étant perpendiculaire au plan contenant le trajet du lien, de manière à laisser le prolongement de la première extrémité libre en vue de la superposition, et maintient cette extrémité jusqu'à la fin de l'opération de liage ;

— un moyen (37) est prévu pour amener le dispositif de liage (36) dans la zone de superposition des extrémités du lien.

4. Ensemble selon la revendication 3, caractérisé en ce que le moyen de maintien (5) est constitué par un dispositif pouvant effectuer un mouvement de rotation dans un plan parallèle au lien, ce dispositif comportant, à son extrémité, un organe formant pince dont une mâchoire (7) est manœuvrée par l'intervention d'un moyen de commande auxiliaire (15) permettant d'effectuer les mouvements de prise et de tenue du lien, dans le cas de commande mécanique des mouvements ce moyen auxiliaire de commande ayant la forme d'une came.

5. Ensemble selon la revendication 3, caractérisé en ce que le moyen de saisie (4) est constitué par un organe (19, 22) susceptible d'effectuer deux mouvements : pinçage du lien et rotation permettant de présenter cette extrémité du lien dans la position propice au liage, c'est-à-dire permettant la superposition de l'autre extrémité du lien en sens opposé.

6. Ensemble selon la revendication 3, caractérisé en ce que le moyen (37) d'amenée du dispositif de liage (36) dans la zone de superposition des extrémités du lien permet de réaliser le positionnement du dispositif de liage, sa mise en œuvre pour effectuer la ligature et son retour au point de repos.

7. Ensemble selon la revendication 4, caractérisé en ce que la partie formant pince (7, 8) destinée à saisir puis tenir le lien est pourvue de moyens pour déformer ce lien de manière à éviter son glissement sous un effort de traction.

8. Ensemble selon la revendication 5, caractérisé en ce que le moyen de saisie (4) est constitué par un organe cylindrique (17) terminé à une extrémité par une pince dont une mâchoire (19) est solidaire du corps de l'organe et dont l'autre (22) est mobile, la mâchoire (19) solidaire du corps présentant un côté (20) parallèle au corps autour duquel se recourbe l'extrémité du lien au cours de la formation de l'élément à lier et le côté opposé de la mâchoire (19) présentant un pan incliné (21) favorisant l'échappement du lien après ligature, la mâchoire mobile (22) étant commandée par une biellette (24) et un poussoir (25) pour pincer l'extrémité du lien et, après rotation de l'organe (17), la maintenir en attente de la ligature des extrémités du lien puis, après ligature, pour s'ouvrir en permettant l'échappement du lien qui peut glisser sur le côté biseauté (21) de l'autre mâchoire (19).

9. Ensemble selon la revendication 8, caractérisé en ce que l'organe (17) est pourvu de moyens commandant les mouvements impérativement dans l'ordre suivant : pinçage de l'extrémité du lien, puis retournement de cette extrémité.

10. Ensemble selon la revendication 3, caractérisé en ce que tous les mouvements sont effectués par une commande mécanique mettant en œuvre des cames, galets et tringleries pour synchroniser la réalisation des différentes opérations.

11. Ensemble selon la revendication 3, caractérisé en ce que tous les mouvements sont effectués par une commande hydraulique, pneumatique, électrique ou combinée, la synchronisation étant réalisée à l'aide de capteurs de fin de course qui assurent l'ordre d'exécution des opérations.

**Claims**

1. A process for binding elements under pressure passing continuously or discontinuously through a pressing channel (6), consisting in :
— during compression of the element to be bound holding one end (1) of the tie on one side of the channel (6), called binding side, the tie passing from this end (1) through the channel along the front face of the element to be bound then along the face of said element opposite the binding side of the channel, coming possibly from a reserve ;
— after compression and at the beginning of the binding operation properly speaking, bringing the extension of the tie situated on said opposite face through the channel along the rear face of the element to be bound towards the binding side, thus providing a second end (1a) of the tie ;
— freeing the first end which, displaced, is subjected to a second holding operation, whereas the brought part of the tie, forming the second end (1a), is gripped and held in its turn ;
— carrying out binding of the two ends together between the respective holding points (4, 5) with possible cutting of the tie for isolating it from the reserve ;
— holding the new end of the tie in readiness for the formation of the next element to be bound ;
characterized in that it consists, previous to the binding, in superimposing the oppositely directed ends over the length included between the respective holding points (4, 5), by the following complementary implementation :
— the first end (1) is, when it is held during compression of the element to be bound, held curved over a length equal to said length ;
— at the beginning of the binding operation, this curved part is straightened and released then, by its second holding operation, an overall rotation of the first end with its curved part is effected, so as to leave the first end free with a view to the superimposition ;
— the brought part of the tie forming the second end (1a), once gripped and held, is superimposed on this extension of the first end beyond the holding point (4) of this latter, so that the length to be tied is situated between the respective holding points (4, 5) of each end ;
— the binding is carried out over this superimposed length of the two ends, held in position and stretched by the holding points.

2. Process according to claim 1, characterized in that ties are used having at least one large dimension in the section, these ties being for example of flat, round or oval shape.

3. A device for binding elements under pressure passing continuously or discontinuously through a pressing channel (6), comprising :
— a holding means (5) situated on one side of the channel, called binding side, and intended to hold the first end (1) of the tie during compression, and to free it by opening during the binding process, so as to then, during the binding, to seize and hold a brought part of the tie forming the second end (1a), the path of the tie during the compression period being such that the tie, from its first held end, passes through the channel along the front face of the element to be bound so as to follow the face of the element to be bound opposite the binding side before possibly joining a reserve ;
— a mobile means (3) for bringing the extension of the tie situated on said face opposite the elements to be bound, this bringing means (3) by passing through the channel bringing this extension of the tie to the binding side within range of the holding means (5) ;
— a gripping means (4) adapted to grip, move and hold the first end (1) during the binding operation ;
— a binding and possibly cutting device (36) appropriate to the nature of the tie ;
characterized in that, for implementing the process according to claim 1 ;
— the holding means (5) is mobile in a plane parallel to the plane containing the path of the tie about the element to be bound and is movable between two positions situated on each side of the gripping means (4), a first position in which it holds the first or second end in front of the gripping means (4), seen in the direction of movement of the elements to be bound, so that the extension of these ends passes close to the gripping means, the first end turning about this gripping means and thus being curved because it is held and because of the advance of the element to be bound beyond the gripping means (4), and a second position behind the gripping means in which, bringing back the curved part of the first end, it frees it and is ready to receive the second end for superimposing this said end by returning to its first position ;
— the gripping means (4), capable of opening and closing, effects the final movement of the curved part of the first end (1) by rotating on itself, the axis of rotation being perpendicular to the plane containing the path of the tie, so as to leave the extension of the first end free for the superimposition, and holds this end until the end of the binding operation ;

— a means (37) is provided for bringing the binding device (36) into the zone in which the ends of the tie are superimposed.

4. Device according to claim 3, characterized in that the holding means (5) is formed by a device able to effect a rotational movement in a plane parallel to a tie, this device comprising at its end a member forming a nipper one jaw (7) of which is operated by the action of an auxiliary control means (15) for effecting the tie picking up and holding movements, in the case of mechanical controls of the movements this auxiliary control means having the form of a cam.

5. Device according to claim 3, characterized in that the gripping means (4) is formed by a member (19, 22) capable of effecting two movements : nipping the tie and rotating so as to present this end of the tie in the position suitable for binding, i.e. allowing the other end of the tie to be superimposed in an opposite direction.

6. Device according to claim 3, characterized in that the means (37) for bringing the binding device (36) into the zone in which the ends of the tie are superimposed allows the binding device to be positioned, set in motion so as to effect the binding and returned to the rest point.

7. Device according to claim 4, characterized in that the nipper forming part (7, 8) for gripping then holding the tie is provided with means for deforming this tie so as to avoid sliding thereof under a pulling force.

8. Device according to claim 5, characterized in that the gripping means (4) is formed by a cylindrical member (17) ending at one end in a nipper one jaw (19) of which is integral with the body of the member and the other jaw (42) of which is mobile, the jaw (19) integral with the body having one side (20) parallel to the body around which the end of the tie is curved during formation of the element to be bound and the opposite side of the jaw (19) having a slanting face (21) promoting escape of the tie after binding, the mobile jaw (22) being controlled by a link (24) and a pusher (25) for nipping the end of the tie and, after rotation of the member (17), holding it in readiness for binding the ends of the tie then, after binding, for opening while allowing the tie to escape which may slide over the bevelled side (21) of the other jaw (19).

9. Device according to claim 8, characterized in that the member (17) is provided with means controlling the movements imperatively in the following order : nipping of the end of the tie, then turning over of this end.

10. Device according to claim 3, characterized in that all the movements are effected by a mechanical control using cams, rollers and linkages for synchronizing the different operations.

11. Device according to claim 3, characterized in all the movements are effected by a hydraulic, pneumatic, electric or combined control, synchronization being obtained by the use of end of travel sensors which ensure the order of execution of the operations.

**Patentansprüche**

1. Verfahren zum Binden von Einzelteilen unter Druck, welche kontinuierlich bzw. diskontinuierlich in einem Druckkanal (6) vorbeilaufen, wobei folgende Mittel und Arbeitsschritte vorgesehen sind :

— während des Zusammendrückens des zu bindenden Einzelteiles Festhalten eines Endes (1) des Bindebandes auf einer Seite des Druckkanals (6) bzw. auf der Bindeseite, wobei das Bindeband von diesem Ende (1) durch den Druckkanal entlang der Vorderseite des zu bindenden Einzelteiles und anschließend über die der Bindeseite des Druckkanals gegenüberliegende Seite geführt wird und gegebenenfalls von einem Bandvorrat abläuft ;

— nach dem Zusammendrucken und zu Beginn des eigentlichen Bindevorgangs Zuführen der Verlängerung des Bindebandes, welche auf der gegenüberliegenden Seite liegt, durch den Druckkanal entlang der hinten liegenden Seite des zu bindenden Einzelteiles zur Bindeseite hin, wobei somit ein zweites Ende (1a) des Bindebandes vorliegt ;

— Freigeben des ersten Endes, welches nach Umlegung zum zweiten Mal gehalten wird, während der Zuführabschnitt des Bindebandes, welcher das zweite Ende (1a) bildet, seinerseits erfaßt und festgehalten wird ;

— Ausführen der Verbindung der beiden Enden miteinander zwischen den jeweiligen Festhaltepunkten (4, 5), gegebenenfalls mit Abschneiden des Bindebandes zum Abtrennen desselben vom Bandvorrat ;

— Festhalten des neuen Endes des Bindebandes als Vorbereitung zur Bildung eines nächsten zu bindenden Einzelteiles ;

dadurch gekennzeichnet, daß das Verfahren einen Arbeitsschritt vor dem Bindevorgang aufweist, welcher im Übereinanderlegen der in Gegenrichtung über die Länge zwischen den jeweiligen Haltepunkten (4, 5) geführten Enden besteht und die folgenden zusätzlichen Arbeitsstufen umfaßt :

— das erste Ende (1) wird, solange es während des Zusammendrückens des zu bindenden Einzelteiles festgehalten wird, über eine der genannten Länge entsprechende Strecke umgeschlagen und in dieser Lage gehalten ;

— zu Beginn des Bindevorgangs wird dieser umgeschlagene Abschnitt wieder geradegelegt und freigegeben, worauf er zum zweiten Mal erfaßt wird und dabei der gesamte Verband bestehend aus dem ersten Ende mit dem umgeschlagenen Abschnitt so gedreht wird, daß die Verlängerung des ersten Endes zum Übereinanderlegen frei bleibt ;

— der das zweite Ende (1a) bildende Abschnitt des Bindebandes wird, sobald er erfaßt und festgehalten ist, über diese Verlängerung des ersten Endes hinter dem Haltepunkt (4) dieses Bandabschnitts gelegt, auch wenn die zu

bindende Länge zwischen den jeweiligen Haltepunkten (4, 5) der beiden Enden liegt ;

— und der Bindevorgang wird auf dieser Länge vorgenommen, auf der die beiden Enden übereinandergelegt, festgehalten und zwischen den Haltepunkten gespannt sind.

2. Verfahren nach Anspruch 1, dadurch gekennzeichnet, daß ein Bindeband verwendet wird, welches zumindest im Querschnitt erhebliche Abmessungen aufweist, während es beispielsweise flach, rund oder oval geformt ist.

3. Vorrichtung zur Durchführung des Verfahrens nach Anspruch 1 und 2, welche folgende Einrichtungen aufweist :

— eine Halteeinrichtung (5) auf einer Seite, der Bindeseite, des Druckkanals zum Festhalten des ersten Endes (1) des Bindebandes während des Zusammendrückens, zum Freigeben desselben unter Öffnen während des Bindevorgangs in einer Weise, daß anschließend ein das zweite Ende (1a) bildender zugeführter Abschnitt erfaßbar und während des Bindevorgangs festhaltbar ist, wobei während der phase des Zusammendrückens das Bindeband über einen Weg so führbar ist, daß das Band ab seinem ersten festgehaltenen Ende durch den Druckkanal entlang der Vorderseite des zu bindenden Einzelteiles und über die der Bindeseite gegenüberliegende Seite des zu bindenden Einzelteiles verläuft, ehe es gegebenenfalls wieder auf einen Bandvorrat läuft ;

— eine bewegliche Zuführeinrichtung (3) für die auf der gegenüberliegenden Fläche des zu bindenden Einzelteiles liegende Verlängerung des Bindebandes, wobei diese Zuführeinrichtung (3) diese Verlängerung des Bindebandes durch den Druckkanal auf die Bindeseite in den Bereich der Halteeinrichtung (5) führt ;

— eine Einrichtung (4) zum Erfassen, Bewegen und Festhalten des ersten Endes (1) während des Bindevorgangs ;

— eine Bindeeinrichtung (36) gegebenenfalls in Verbindung mit einer Schneideinrichtung entsprechend der Art des jeweiligen Bandes ;
dadurch gekennzeichnet, daß die Vorrichtung die folgenden Merkmale aufweist :

— die Halteeinrichtung (5) ist in einer zu der Ebene, in welcher die Bahn des Bindebandes um das zu bindende Einzelteil verläuft, parallelen Ebene beweglich und zwischen zwei, jeweils beiderseits der Greifeinrichtung (4) liegenden Positionen verschiebbar, wobei sie in der ersten Position das erste bzw. zweite Ende vor der Greifeinrichtung (4), in Laufrichtung der zu bindenden Einzelteile gesehen, in der Weise hält, daß die Verlängerung dieser Enden nahe der Greifeinrichtung verläuft, während das erste Ende um diese Greifeinrichtung gedreht und somit umgeschlagen ist, da es festgehalten ist und da das zu bindende Einzelteil über die Greifeinrichtung (4) hinaus vorwärtsbewegt ist, während sie in der zweiten Position hinter der Greifeinrichtung, wohin der umgeschlagene Abschnitt des ersten Endes geführt ist, diesen Abschnitt freigibt und zur Aufnahme des zweiten Endes zum Auflegen desselben durch Rückführung in dessen erste Lage bereit ist ;

— die Greifeinrichtung (4) ist öffen- und schließbar und ist zur abschließenden Bewegung des umgeschlagenen Abschnitts des ersten Endes (1) durch Drehung um sich selbst vorgesehen, wobei die Drehachse senkrecht auf der Ebene steht, in welcher die Bahn des Bindebandes verläuft, so daß die Verlängerung des ersten Endes zum Übereinanderlegen freibleibt, und ferner ist die Greifeinrichtung zum Halten dieses Endes bis zum Abschluß des Bindevorgangs vorgesehen ;

— zum Einfahren der Bindevorrichtung (36) in den Bereich, in welchem die Enden des Bindebandes übereinandergelegt sind, ist eine Einrichtung (37) vorgesehen.

4. Vorrichtung nach Anspruch 3, dadurch gekennzeichnet, daß die Halteeinrichtung (5) aus einer Anordnung aufgebut ist, welche eine Drehbewegung in einer zum Bindeband parallel verlaufenden Ebene ausführen kann und an ihrem Ende ein als Klemmteil wirkendes Element aufweist, dessen eine Klemmbacke (7) über eine Hilfssteuereinrichtung (15) betätigbar ist, welche die Ausführung der Bewegungen zum Erfassen und Halten des Bindebandes gestattet, wobei im Falle einer mechanischen Steuerung der Bewegungen diese Hilfssteuereinrichtung die Form eines Nockens aufweist.

5. Vorrichtung nach Anspruch 3, dadurch gekennzeichnet, daß die Greifeinrichtung (4) aus einem Bauteil (19, 22) besteht, welches zur Ausführung von zwei Bewegungen konstruiert ist, nämlich Festklemmen des Bindebandes und Drehung desselben, wobei dieses Ende des Bindebandes in eine für den Bindevorgang günstige Lage bringbar ist, mit anderen Worten in eine Lage, in welcher sich das andere Ende des Bindebandes in Gegenrichtung darüberlegen läßt.

6. Vorrichtung nach Anspruch 3, dadurch gekennzeichnet, daß die Einfahrvorrichtung (37) für die Bindevorrichtung (36) zum Einfahren in den Bereich, in dem die Enden des Bindebandes übereinandergelegt sind, eine Positionierung der Bindevorrichtung, deren Arbeitsablauf zur Vornahme des Bindevorgangs und deren Rückführung in die Ruhelage gestattet.

7. Vorrichtung nach Anspruch 4, dadurch gekennzeichnet, daß der als Klemmteil (7, 8) ausgebildete Abschnitt zum Erfassen und anschließenden Halten des Bindebandes mit einer Einrichtung zum Verformen des Bindebandes in einer Weise versehen ist, bei welcher ein Herausgleiten des Bindebandes unter Zugeinwirkung verhindert ist.

8. Vorrichtung nach Anspruch 5, dadurch gekennzeichnet, daß die Greifeinrichtung (4) aus einem zylinderförmigen Bauteil (17) besteht, welches an einem Ende in einem Klemmteil endet, dessen eine Klemmbacke (19) fest mit dem Hauptteil des Bauteils verbunden ist, während dessen andere Klemmbacke (22) beweglich ist, wobei die fest mit dem Hauptteil verbundene Klemmbacke (19) eine zu diesem parallel verlaufende Seite (20) aufweist, um welche das Ende des Bindebandes während der Formierung des zu bindenden Einzelteiles umschlagbar ist, während die gegenüberliegende Seite der Klemmbacke (19), eine Schrägfläche (21) aufweist, welche das Herausgleiten des Bindebandes nach dem Bindevorgang begünstigt, und wobei die bewegliche Klemmbacke (22) durch eine zwischengeschaltete Stange (24) und eine Druckteil (25) so steuerbar ist, daß das Ende des Bindebandes festklemmbar und nach Drehung des Bauteils (17) bis zum Verbinden der Enden des Bindebandes festhaltbar ist, worauf sich die bewegliche Klemmbacke öffnet und das Bindeband herausgleiten läßt, welches auf die Schrägfläche (21) der anderen Klemmbacke (19) gleiten kann.

9. Vorrichtung nach Anspruch 8, dadurch gekennzeichnet, daß das Bauteil (17) mit einer Einrichtung zum Steuern der einzelnen Bewegungsabläufe in folgender zwingender Reihenfolge aufgebaut ist : Festklemmen des Endes des Bindebandes, anschließend Umschlagen dieses Endes.

10. Vorrichtung nach Anspruch 3, dadurch gekennzeichnet, daß alle Bewegungen unter mechanischer Steuerung ausführbar sind, wozu Nocken, Rollen und Gestänge zur synchronen Ausführung der verschiedenen Arbeitsgänge vorgesehen sind.

11. Vorrichtung nach Anspruch 3, dadurch gekennzeichnet, daß alle Bewegungen unter hydraulischer, pneumatischer, elektrischer oder kombinierter Steuerung ablaufen, wobei die Synchronisierung mit Hilfe von Wegbegrenzungsaufnehmern erfolgt, welche die Reihenfolge der Ausführung der einzelnen Arbeitsgänge sicherstellen.

Fig.1

34

33

35

6

4

5

2

2a

1

3

32

1

Fig.2

Fig.3

Fig.4

0 076 741

*Fig.5*

27

30

18   17   31

4

*Fig.6*

0 076 741

Fig. 7A

Fig. 7B

Fig.7C

1
22
19
5

Fig.7D

1
22
19
5
1a

Fig. 7E

5

16

1a

1

22

19

Fig. 7F

16

5

22

19

1a

1

8

Fig. 7G

Fig. 7H

0 076 741

Fig. 7I

Fig. 7J